(19) Europäisches Patentamt
European Patent Office
Office européen des brevets

(11) Veröffentlichungsnummer: **0 306 452 B1**

(12) **EUROPÄISCHE PATENTSCHRIFT**

(45) Veröffentlichungstag der Patentschrift: **07.09.94**

(51) Int. Cl.$^5$: **C09B 44/04**, C09B 56/04, D21H 17/45, D06P 1/41

(21) Anmeldenummer: **88810583.0**

(22) Anmeldetag: **24.08.88**

(54) **Kationische Stilben-disazofarbstoffe.**

(30) Priorität: **03.09.87 CH 3374/87**

(43) Veröffentlichungstag der Anmeldung:
**08.03.89 Patentblatt 89/10**

(45) Bekanntmachung des Hinweises auf die Patenterteilung:
**07.09.94 Patentblatt 94/36**

(84) Benannte Vertragsstaaten:
**CH DE FR GB LI**

(56) Entgegenhaltungen:
**EP-A- 0 055 221**
**CH-A- 490 565**
**DE-A- 2 037 545**
**FR-A- 613 041**
**GB-A- 1 299 080**

**CHEMISTRY OF SYNTHETIC DYES, Band 1, 1952, Seiten 628-636, Academic Press; K.VENKATARAMAN: "Stilbene dyes"**

(73) Patentinhaber: **CIBA-GEIGY AG**
**Klybeckstrasse 141**
**CH-4002 Basel (CH)**

(72) Erfinder: **Stingelin, Willy**
**Stockackerstrasse 1A**
**CH-4153 Reinach (CH)**

**EP 0 306 452 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft neue kationische Disazofarbstoffe, Verfahren zu deren Herstellung sowie deren Verwendung als Farbstoffe, insbesondere zum Färben von Textilmaterialien und insbesondere Papier.

Die neuen Disazofarbstoffe entsprechen der Formel

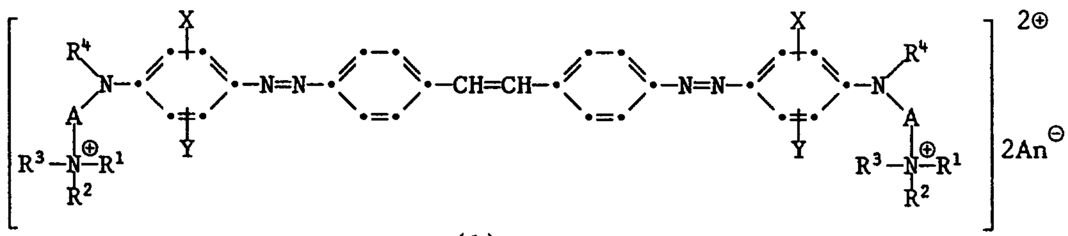

(1)

worin

R[1], R[2], R[3] und R[4] unabhängig voneinander je Methyl, Ethyl, n- oder iso-Propyl, n-, sec- oder tert-Butyl, geradkettiges oder verzweigtes Pentyl oder Hexyl, Cyclopentyl oder Cyclohexyl darstellen, wobei diese Reste durch Hydroxy, Cyan, Phenyl oder Alkoxy substituiert sein können, oder worin R[1] und R[2] zusammen mit dem sie verbindenden Stickstoffatom einen Pyrrolidin-, Piperidin-, Morpholin- oder Piperazinrest, oder worin R[1], R[2] und R[3] zusammen mit dem sie verbindenden Stickstoffatom einen Pyridinium- oder monoquaternierten Triethylendiaminrest bilden und worin

A einen Alkylenrest mit 2 bis 6 C-Atomen,

X und Y unabhängig voneinander Wasserstoff, Halogen, gegebenenfalls durch Hydroxy, Halogen, Cyan oder $C_1$-$C_4$-Alkoxy substituiertes $C_1$-$C_4$-Alkyl oder $C_1$-$C_4$-Alkoxy und $An^{\ominus}$ ein Anion bedeuten.

In der GB-A-1 299 080 ist ein strukturell ähnlicher Farbstoff beschrieben, der jedoch andersartige kationische Gruppen und ausserdem zwei Sulfogruppen besitzt. Die FR-A-613 041 betrifft Stilben-azofarbstoffe ohne kationische Gruppen und die EP-A-0 055 221 Tetrafluorboratsalze monokationischer Azofarbstoffe.

Vorzugsweise bedeuten R[1], R[2] und R[3] unabhängig voneinander je $C_1$-$C_3$-Alkyl oder Hydroxyethyl, insbesondere je Methyl oder Hydroxyethyl oder R[1], R[2] und R[3] bilden zusammen mit dem sie verbindenden Stickstoffatom einen Pyridiniumrest.

R[4] stellt vor allem einen unsubstituierten $C_1$-$C_{12}$-Alkylrest dar, insbesondere einen $C_1$-$C_4$-Alkyrest, wobei Methyl und Ethyl besonders bevorzugt sind.

A bedeutet einen Alkylenrest mit 2-6 C-Atomen, welcher verzweigt oder vorzugsweise unverzweigt ist und substituiert sein kann, z.B. durch Hydroxy. Geeignete Reste sind z.B.: Ethylen, Ethyliden, Propylen, Trimethylen, Ethylethylen, 1-Methyl-1,3-trimethylen, Pentamethylen, Hexamethylen oder 2-Hydroxy-1,3-trimethylen.

Unter diesen sind Propylen, Trimethylen, 2-Hydroxy-1,3-trimethylen sowie vor allem Ethylen bevorzugt.

X und Y bedeuten unabhängig voneinander je Wasserstoff, Halogen, wie Brom oder vor allem Chlor, $C_1$-$C_4$-Alkyl oder -Alkoxy, wobei diese letztgenannten Gruppen durch Hydroxy, Halogen, wie Brom oder vor allem Chlor, Cyan oder $C_1$-$C_4$-Alkoxy substituiert sein können. Vorzugsweise ist X Wasserstoff oder Methyl und Y Wasserstoff, Methyl, Methoxy oder Chlor.

Als Anionen $An^{\ominus}$ kommen sowohl anorganische wie organische Anionen in Frage; beispielsweise sind genannt: Halogenid-, wie Chlorid-, Bromid- oder Jodid-, Sulfat-, Methylsulfat-, Bortetrafluorid-, Aminosulfonat-, Perchlorat-, Carbonat-, Bicarbonat-, Phosphat-, Phosphormolybdat-, Phosphorwolframat-, Phosphorwolframmolybdat-, Benzolsulfonat-, Naphthalinsulfonat-, 4-Chlorbenzolsulfonat-, Oxalat-, Maleinat-, Acetat-, Propionat-, Lactat-, Succinat-, Chloracetat-, Tartrat-, Methansulfonat- oder Benzoationen, oder komplexe Anionen, wie das von Chlorzinkdoppelsalzen.

Das Anion ist im allgemeinen durch das Herstellungsverfahren vorgegeben. Vorzugsweise liegen die Chloride, Hydrogensulfate, Sulfate, Methosulfate, Phosphate, Formiate, Lactate oder Acetate vor. Die Anionen können in bekannter Weise gegen andere Anionen ausgetauscht werden.

Eine bevorzugte Ausführungsform der Erfindung betrifft Disazofarbstoffe der Formel (1) worin

R[1], R[2] und R[3] unabhängig voneinander je $C_1$-$C_3$-Alkyl oder Hydroxyethyl bedeuten oder R[1], R[2] und R[3] zusammen mit dem sie verbindenden Stickstoffatom einen Pyridiniumrest bilden,

| | |
|---|---|
| $R^4$ | einen $C_1$-$C_4$-Alkylrest, |
| A | Propylen, Trimethylen, 2-Hydroxy-1,3-trimethylen oder Ethylen, |
| X | Wasserstoff, |
| Y | Wasserstoff, Methyl, Methoxy oder Chlor und |
| $An^\ominus$ | ein Anion bedeuten. |

Die Herstellung der Disazofarbstoffe der Formel (1) erfolgt auf an sich bekannte Art und Weise, beispielsweise indem man 1 Mol 4,4'-Diaminostilben tetrazotiert und mit 2 Mol einer Kupplungskomponente der Formel

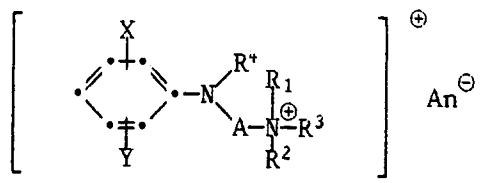

(2)

umsetzt, wobei für X, Y, A, $R^1$, $R^2$, $R^3$, $R^4$ und $An^\ominus$ die zuvor angegebenen Bedeutungen und Bevorzugungen gelten.

Die Kupplungskomponenten der Formel (2) sind bekannt, oder können auf bekannte Art und Weise erhalten werden. Besonders geeignete Verbindungen der Formel (2) sind z.B. die folgenden

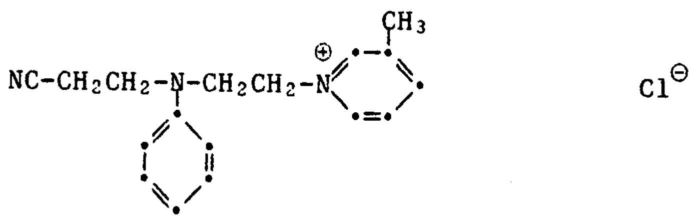

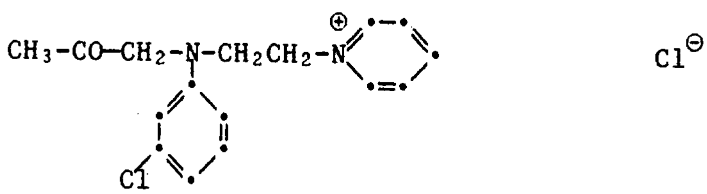

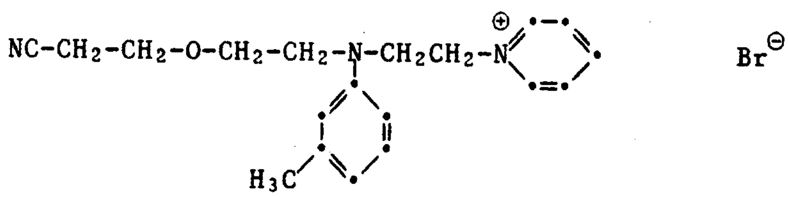

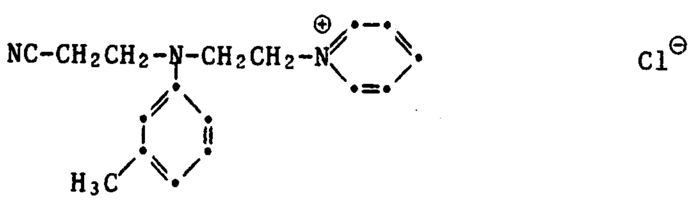

ferner das N-2-(N'-Phenyl-N'$\beta$-cyanethyl)-aminoethylpyridiniumchlorid oder -bromid, N-2-(N'-Phenyl-N'$\beta$-acetoxyethyl)-aminoethylpyridiniumchlorid, N-2-(N'-Phenyl-N'$\beta$-cyanethoxyethyl)-aminoethylpyridiniumchlorid und dgl.. Diese Verbindungen können erhalten werden durch Umsetzung des entsprechenden N-(Halogenalkyl)-anilins mit einer sekundären oder tertiären heterocyclischen Base, z.B. mit Pyridin, Morpholin, Thiomorpholin, Chinolin, Piperidin, Pyrimidin, Pyrrolidin und dgl..

Die Tetrazotierung und die Kupplung werden unter den üblichen Bedingungen durchgeführt.

Die Disazoverbindungen der Formel (1) werden sowohl als Pulver- bzw. Granulat-Präparationen als auch in Form von konzentrierten Lösungen zum Einsatz gebracht. Pulver-Präparationen werden in üblicher Weise mit Stellmaterialien wie Natriumsulfat, -phosphat, -chlorid-, -acetat in Gegenwart von Entstaubungsmitteln eingestellt, oder die Azoverbindungen werden direkt als Sprühtrocknungspräparationen in den Handel gebracht. Konzentrierte Farbstofflösungen können wässriger oder wässrig/organischer Art sein, wobei übliche und möglichst gut abbaubare Zusätze bevorzugt werden wie organische Säuren, vorzugsweise Essigsäure, Ameisensäure, Milchsäure, Zitronensäure, Amide wie Formamid, Dimethylformamid, Harnstoff, Alkohole wie Glykol, Diglykol, Diglykolether, vorzugsweise Methyl- oder Ethylether.

Verwendung finden die Disazoverbindungen der Formel (1) vor allem als Farbstoffe zum Färben und Bedrucken von Textilmaterialien, Papier, Leder und zur Bereitung von Tinten. Als Textilmaterialien kommen natürliche und synthetische kationisch anfärbbare Materialien in Frage. Bevorzugt werden die neuen Azoverbindungen zum Färben und Bedrucken von Papier, Halbkartons und Kartons in der Masse und in der Oberfläche, sowie von Textilmaterialien, die z.B. vorteilhaft aus Homo- oder Mischpolymerisaten des Acrylnitrils bestehen oder aus synthetischen Polyamiden oder Polyestern, welche durch saure Gruppen modifiziert sind, eingesetzt. Man färbt diese Textilmaterialien vorzugsweise in wässrigem, neutralem oder saurem Medium nach dem Ausziehverfahren, gegebenenfalls unter Druck oder nach dem Kontinueverfahren. Das Textilmaterial kann dabei in verschiedenartigster Form vorliegen, beispielsweise als Faser, Faden, Gewebe, Gewirke, Stückware und Fertigware, wie Hemden oder Pullover.

Mit den erfindungsgemässen Farbstoffen lassen sich egale Färbungen bzw. Drucke herstellen, die sich durch sehr gute Allgemeinechtheiten vor allem einen sehr hohen Ausziehgrad und gute Wasserechtheiten auszeichnen.

Des Weiteren können die neuen Disazoverbindungen der Formel (1) auch zum Färben und Bedrucken von natürlichen und regenerierten Cellulosematerialien, vor allem von Baumwolle und Viscose verwendet werden, wobei man ebenfalls farbstarke Ausfärbungen erhält.

Die neuen Disazoverbindungen der Formel (1) haben auf diesen Textilmaterialien ein gutes Ziehvermögen, einen guten Ausziehgrad und die erhaltenen Färbungen weisen sehr gute Echtheiten, vor allem Nassechtheiten auf.

Eine bevorzugte Verwendung der neuen Disazoverbindungen der Formel (1) liegt in der Anwendung zum Färben von Papier aller Arten, vor allem von gebleichtem ungeleimtem und geleimtem ligninfreiem Papier, wobei von gebleichtem oder ungebleichtem Zellstoff ausgegangen werden kann und Laub- oder Nadelholz-Zellstoff, wie Birken- und/oder Kiefernsulfit und/oder Sulfat-Zellstoff verwendet werden kann. Ganz besonders geeignet sind diese Verbindungen zum Färben von ungeleimtem Papier (z.B. Servietten, Tischdecken, hygienischen Papieren) als Folge ihrer sehr hohen Affinität zu diesem Substrat.

Die neuen Disazoverbindungen der Formel (1) ziehen auf diese Substrate sehr gut auf, wobei die Abwässer praktisch farblos bleiben.

Man erhält Färbungen in gelben, gelb-orangen oder roten Nuancen.

Die erhaltenen Färbungen zeichnen sich durch gute Allgemeinechtheiten aus bei gleichzeitig hoher Klarheit, Farbstärke und Nassechtheit, d.h. sie zeigen keine Neigung zum Ausbluten, wenn gefärbtes Papier in nassem Zustand mit feuchtem weissem Papier in Berührung gebracht wird. Darüber hinaus weisen sie eine gute Alaun-, Säure- und Alkali-Echtheit auf. Die Nassechtheit bezieht sich nicht nur auf Wasser, sondern auch auf Milch, Fruchtsäfte und gesüsstes Mineralwasser; wegen ihrer guten Alkoholechtheit sind sie auch gegen alkoholische Getränke beständig. Diese Eigenschaft ist z.B. besonders für Servietten und Tischdecken erwünscht, bei denen vorhersehbar ist, dass das gefärbte Papier in nassem Zustand (z.B. getränkt mit Wasser, Alkohol, Tensid-Lösung etc....) in Berührung mit anderen Flächen wie Textilien, Papier und dergleichen kommt, die gegen Verschmutzung geschützt werden müssen.

Die hohe Affinität für Papier und die grosse Ausziehgeschwindigkeit der neuen Farbstoffe ist für das Kontinue-Färben von Papier von grossem Vorteil.

Die folgenden Beispiele veranschaulichen die Erfindung, ohne sie darauf zu limitieren. Teile (T) sind - sofern nichts anderes angegeben - Gewichtsteile und die Temperaturen sind in Grad Celsius angegeben; dH bedeutet Grad deutsche Härte.

Die Abkürzung RKN stellt eine Qualitätsbezeichnung dar und gibt den Reinheitsgrad der Cellulose an; die Abkürzung SR (Schopper-Riegler) gibt den Mahlgrad an.

Beispiel 1: 4,2 Teile 4,4'-Diaminostilben werden in 30 Teilen Wasser, 30 Teilen Eis und 14 Teilen 32 %iger Salzsäure angerührt und mit 10 Vol-Teilen 4n-Natriumnitritlösung bei 0-5° tetrazotiert. Anschliessend wird eine Lösung von 10.7 Teilen N-2-(N'-Phenyl-N'-ethyl)-aminoethyl-pyridiniumchlorid in 80 Teilen Wasser zur tetrazotierten Lösung gegeben, das Kupplungsgemisch mit krist. Natriumacetat auf pH 3-4 gestellt und 8 Stunden gerührt. Dann werden 3,6 Teile Natriumchlorid zugegeben und anschliessend 6 Teile 50 %ige Zinkchloridlösung zugetropft. Der ausgefallene Farbstoff wird abfiltriert, mit Ethanol und danach mit

Aceton gewaschen und im Vakuum bei 60° getrocknet. Es werden 16,6 Teile Farbstoff der Formel

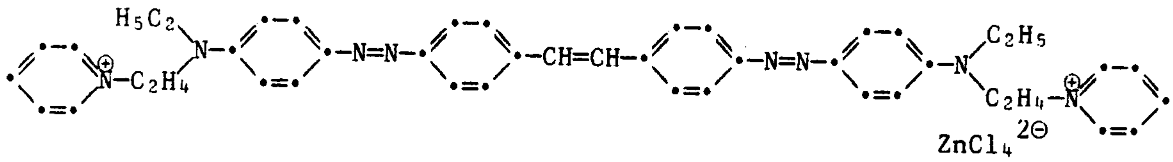

erhalten in Form eines Pulvers, das in verdünnter Ameisensäure löslich ist und Papier in orangen Tönen färbt.

Beispiel 2: Arbeitet man wie im Beispiel 1 beschrieben, verwendet jedoch 11,7 Teile N-2-('N-Phenyl-N'-n.-butyl)aminoethyl-pyridiniumchlorid, so erhält man 15 Teile Farbstoff der Formel

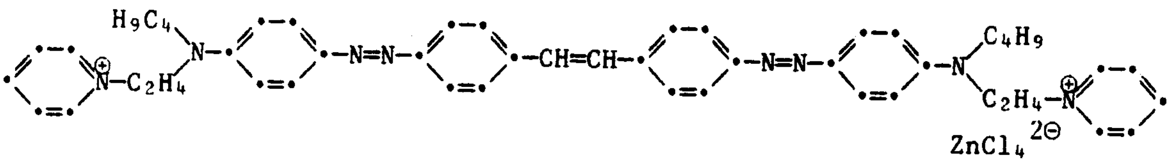

Beispiele 3-18: Nach dem gleichen Verfahren erhält man die in der nachfolgenden Tabelle angegebenen Farbstoffe

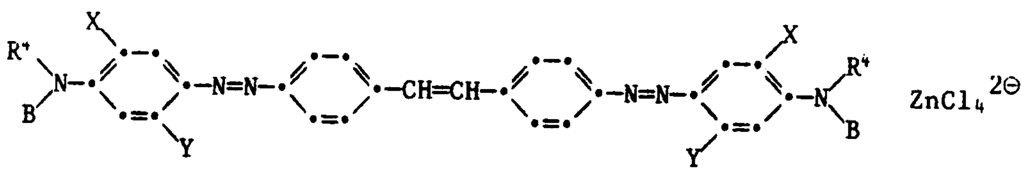

| Beispiel | $R^4$ | B | Y | X |
|---|---|---|---|---|
| 3 | $-CH_3$ | 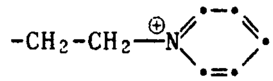 | H | H |
| 4 | $-C_3H_7$ | 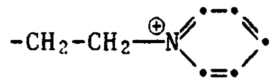 | H | H |
| 5 | $-C_5H_{11}$ | 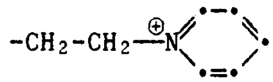 | H | H |
| 6 | $-C_8H_{17}$ | 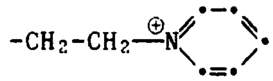 | H | H |
| 7 | $-C_2H_5$ | $-CH_2-CH_2-\overset{\oplus}{N}(C_2H_4OH)_3$ | H | H |
| 8 | $-C_2H_5$ | 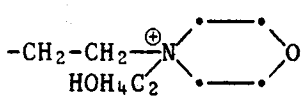 | H | H |
| 9 | $-C_2H_5$ | $-CH_2-\underset{OH}{CH}-CH_2-N^{\oplus}(CH_3)_3$ | $-CH_3$ | H |
| 10 | $-C_2H_5$ | 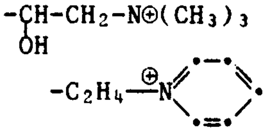 | $-CH_3$ | H |
| 11 | $-CH_3$ | 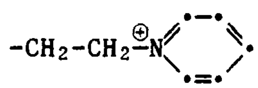 | $-CH_3$ | $-CH_3$ |
| 12 | $-C_2H_5$ | 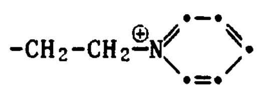 | $-CH_3$ | $-CH_3$ |
| 13 | $-C_3H_7$ | 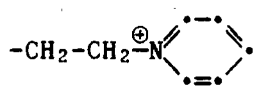 | $-CH_3$ | $-CH_3$ |
| 14 | $-C_2H_5$ | $-CH_2-CH_2-\overset{\oplus}{N}(C_2H_4OH)_3$ | $-CH_3$ | $-CH_3$ |
| 15 | $-C_2H_5$ | 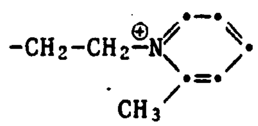 | H | H |
| 16 | $-C_2H_5$ | 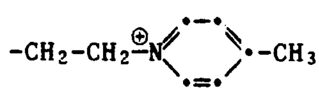 | H | H |
| 17 | $-C_2H_5$ | 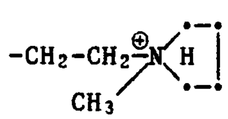 | H | H |
| 18 | $-C_2H_5$ | 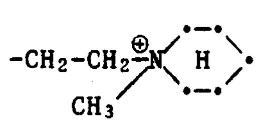 | H | H |

Beispiel 19: Man vermischt 50 T chemisch gebleichten Buchen-Sulfit-Zellstoff mit 50 T gebleichtem Zellstoff (RKN 15; Mahlgrad 22° SR) und 2 T des Farbstoffes gemäss Beispiel 1 in Wasser (pH 6, Wasserhärte 10° dH, Temperatur 20°, Flottenverhältnis 1:40). Nach 15 minütigem Rühren werden Papierblätter auf einem Frank-Blattbildner hergestellt.

Das Papier ist in einer orangefarbenen Nuance gefärbt. Das Abwasser ist völlig farblos. Der Ausziehgrad erreicht praktisch 100 %. Die Licht- und Nassechtheiten sind ausgezeichnet.

Beispiel 20: Es wird eine Papierbahn aus gebleichtem Buchen-Sulfit-Zellstoff (22° SR) auf einer kontinuierlich arbeitenden Labor-Papiermaschine hergestellt. Zehn Sekunden vor dem Stoffauflauf wird eine wässrige Lösung des Farbstoffes gemäss Beispiel 1 unter starker Turbulenz dem Dünnstoff kontinuierlich zudosiert (0,5 %ige Färbung, Flottenverhältnis 1:400, Wasserhärte 10° dH, pH 6, Temperatur 20°).

Es entsteht auf der Papierbahn eine farbstarke Orangenuance von mittlerer Intensität. Das Abwasser ist völlig farblos.

Beispiel 21: 10 T Baumwollgewebe (gebleichte mercerisierte Baumwolle) werden in einem Labor-Baumfärbeapparat in 200 T einer Flotte (Wasserhärte 10° dH, pH 4, 3 Umwälzungen der Färbeflotte pro Minute) die 0,05 T des Farbstoffes gemäss Beispiel 1 enthält, gefärbt. Die Temperatur wird in 60 Minuten von 20° auf 100° erhöht, dann während 15 Minuten konstant gehalten.

Die Färbeflotte ist völlig ausgezogen. Es entsteht auf dem Baumwollgewebe eine farbstarke orange Färbung, welche sich durch eine gute Lichtechtheit und eine sehr gute Nassechtheit auszeichnet.

Färbt man bei gleicher Arbeitsweise ein Textilgewebe aus Regenerat-Cellulose (Viskose), so erhält man auch auf diesem Material mit dem Farbstoff des Beispiels 1 eine farbstarke gelb-orange Färbung, die eine gute Lichtechtheit und sehr gute Nassechtheit besitzt.

**Patentansprüche**

**1.** Disazofarbstoffe der Formel

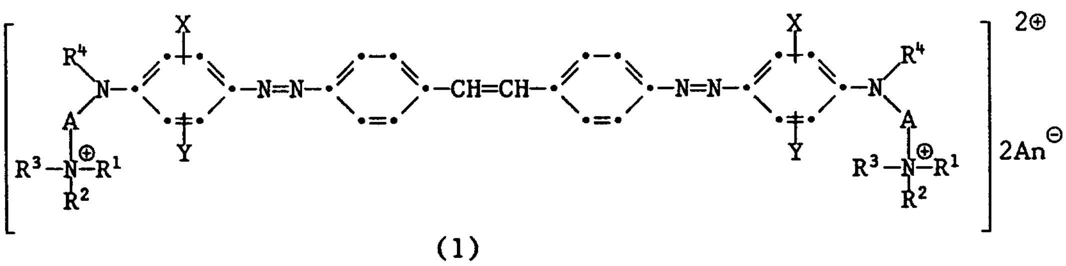

(1)

worin

| | |
|---|---|
| $R^1$, $R^2$, $R^3$ und $R^4$ | unabhängig voneinander je Methyl, Ethyl, n- oder iso-Propyl, n-, sec- oder tert-Butyl, geradkettiges oder verzweigtes Pentyl oder Hexyl, Cyclopentyl oder Cyclohexyl darstellen, wobei diese Reste durch Hydroxy, Cyan, Phenyl oder Alkoxy substituiert sein können, oder worin $R^1$ und $R^2$ zusammen mit dem sie verbindenden Stickstoffatom einen Pyrrolidin-, Piperidin-, Morpholin- oder Piperazinrest, oder worin $R^1$, $R^2$ und $R^3$ zusammen mit dem sie verbindenden Stickstoffatom einen Pyridinium- oder monoquaternierten Triethylendiaminrest bilden und worin |
| A | einen Alkylenrest mit 2 bis 6 C-Atomen, |
| X und Y | unabhängig voneinander Wasserstoff, Halogen, gegebenenfalls durch Hydroxy, Halogen, Cyan oder $C_1$-$C_4$-Alkoxy substituiertes $C_1$-$C_4$-Alkyl oder $C_1$-$C_4$-Alkoxy und $An^{\ominus}$ ein Anion bedeuten. |

**2.** Disazofarbstoffe gemäss Anspruch 1, worin $R^1$, $R^2$ und $R^3$ unabhängig voneinander je $C_1$-$C_3$-Alkyl oder Hydroxyethyl bedeuten oder $R^1$, $R^2$ und $R^3$ zusammen mit dem sie verbindenden Stickstoffatom einen Pyridiniumrest bilden.

**3.** Disazofarbstoffe gemäss einem der Ansprüche 1 oder 2, worin $R^4$ einen unsubstituierten $C_1$-$C_{12}$-Alkylrest, vor allem einen $C_1$-$C_4$-Alkylrest darstellt.

**4.** Disazofarbstoffe gemäss einem der Ansprüche 1-3, worin A Ethylen, Ethyliden, Propylen, Trimethylen, Ethylethylen, 1-Methyl-1,3-trimethylen, Pentamethylen, Hexamethylen oder 2-Hydroxy-1,3-trimethylen, vor allem Propylen, Trimethylen, 2-Hydroxy-1,3-trimethylen oder Ethylen darstellt.

**5.** Disazofarbstoffe gemäss einem der Ansprüche 1-4, worin X Wasserstoff oder Methyl bedeutet.

**6.** Disazofarbstoffe gemäss einem der Ansprüche 1-5, worin Y Wasserstoff, Methyl, Methoxy oder Chlor bedeutet.

**7.** Disazofarbstoffe gemäss Anspruch 1, worin

| | |
|---|---|
| $R^1$, $R^2$ und $R^3$ | unabhängig voneinander je $C_1$-$C_3$-Alkyl oder Hydroxyethyl bedeuten oder $R^1$, $R^2$ und $R^3$ zusammen mit dem sie verbindenden Stickstoffatom einen Pyridiniumrest bilden, |
| $R^4$ | einen $C_1$-$C_4$-Alkylrest, |
| A | Propylen, Trimethylen, 2-Hydroxy-1,3-trimethylen oder Ethylen, |
| X | Wasserstoff, |
| Y | Wasserstoff, Methyl, Methoxy oder Chlor und |
| $An^{\ominus}$ | ein Anion bedeuten. |

**8.** Verfahren zur Herstellung der Disazofarbstoffe der Formel (1) gemäss Anspruch 1, dadurch gekennzeichnet, dass man 1 Mol 4,4'-Diaminostilben tetrazotiert und mit 2 Mol einer Kupplungskomponente der Formel

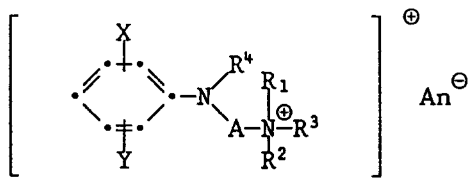

(2)

umsetzt, wobei für X, Y, A, $R^1$, $R^2$, $R^3$, $R^4$ und $An^{\ominus}$ die im Anspruch 1 angegebenen Bedeutungen gelten.

**9.** Verwendung der Azoverbindungen der Formel (1) gemäss Anspruch 1 zum Färben und Bedrucken von Textilmaterialien, Papier, Leder und zur Bereitung von Tinten.

**10.** Verwendung der Azoverbindungen der Formel (1) gemäss Anspruch 1 zum Färben und Bedrucken von natürlichen und regenerierten Cellulosematerialien, vor allem Baumwolle und Viscose.

**11.** Verwendung der Azoverbindungen der Formel (1) gemäss Anspruch 1 zum Färben und Bedrucken von Papier aller Arten, insbesondere zum Färben und Bedrucken von gebleichtem, ungeleimtem, ligninfreiem Papier.

**12.** Verwendung der Azoverbindungen der Formel (1) gemäss Anspruch 1 zum Färben und Bedrucken von Polyacrylnitrilmaterialien.

**13.** Die mit den Azoverbindungen der Formel (1) gemäss Anspruch 1 behandelten bzw. gefärbten und bedruckten Materialien.

## Claims

**1.** A disazo dye of the formula

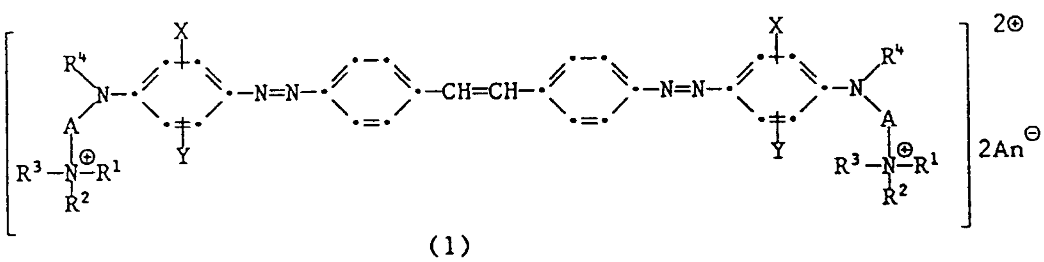

(1)

in which
$R^1$, $R^2$, $R^3$ and $R^4$ independently of one another are each methyl, ethyl, n-propyl or isopropyl, n-, sec- or tert-butyl, straight-chain or branched pentyl or hexyl, cyclopentyl or cyclohexyl, it being possible for these radicals to be substituted by hydroxyl, cyano, phenyl or alkoxy, or in which $R^1$ and $R^2$ together with the nitrogen atom linking them form a pyrrolidine, piperidine, morpholine or piperazine radical, or in which $R^1$, $R^2$ and $R^3$ together with the nitrogen atom linking them form a pyridinium or monoquaternized triethylenediamine radical and
in which
A is an alkylene radical having 2 to 6 C atoms,
X and Y independently of one another are hydrogen, halogen, $C_1$-$C_4$alkyl or $C_1$-$C_4$alkoxy which are unsubstituted or substituted by hydroxyl, halogen, cyano or $C_1$-$C_4$alkoxy and $An^{\ominus}$ is an anion.

**2.** A disazo dye according to claim 1, in which $R^1$, $R^2$ and $R^3$ independently of one another are each $C_1$-$C_3$alkyl or hydroxyethyl or $R^1$, $R^2$ and $R^3$ together with the nitrogen atom linking them form a pyridinium radical.

**3.** A disazo dye according to either of claims 1 or 2, in which $R^4$ is an unsubstituted $C_1$-$C_{12}$alkyl radical, in particular a $C_1$-$C_4$alkyl radical.

**4.** A disazo dye according to any one of claims 1 to 3, in which A is ethylene, ethylidene, propylene, trimethylene, ethylethylene, 1-methyl-1,3-trimethylene, pentamethylene, hexamethylene or 2-hydroxy-1,3-trimethylene, in particular propylene, trimethylene, 2-hydroxy-1,3-trimethylene or ethylene.

**5.** A disazo dye according to any one of claims 1 to 4, in which X is hydrogen or methyl.

**6.** A disazo dye according to any one of claims 1 to 5, in which Y is hydrogen, methyl, methoxy or chlorine.

**7.** A disazo dye according to claim 1, in which $R^1$, $R^2$ and $R^3$ independently of one another are each $C_1$-$C_3$alkyl or hydroxyethyl or $R^1$, $R^2$ and $R^3$ together with the nitrogen atom linking them form a pyridinium radical, $R^4$ is a $C_1$-$C_4$alkyl radical, A is propylene, trimethylene, 2-hydroxy-1,3-trimethylene or ethylene, X is hydrogen, Y is hydrogen, methyl, methoxy or chlorine and $An^{\ominus}$ is an anion.

**8.** A process for the preparation of a disazo dye of the formula (1) according to claim 1, which comprises tetrazotizing 1 mol of 4,4'-diaminostilbene and reacting the intermediate with 2 mol of a coupling component of the formula

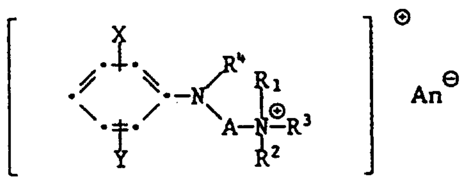

(2)

X, Y, A, $R^1$, $R^2$, $R^3$, $R^4$ and $An^{\ominus}$ being as defined in claim 1.

**9.** Use of an azo compound of the formula (1) according to claim 1 for dyeing and printing textile materials, paper, leather and for preparing inks.

**10.** Use of an azo compound of the formula (1) according to claim 1, for dyeing and printing natural and regenerated cellulose materials, in particular cotton and viscose.

**11.** Use of an azo compound of the formula (1) according to claim 1 for dyeing and printing paper of any kind, in particular for dyeing and printing bleached, unsized, lignin-free paper.

**12.** Use of an azo compound of the formula (1) according to claim 1 for dyeing and printing polyacrylonitrile materials.

13. A material treated or dyed and printed with the azo compound of the formula (1) according to claim 1.

**Revendications**

1. Colorants diazoïques de formule

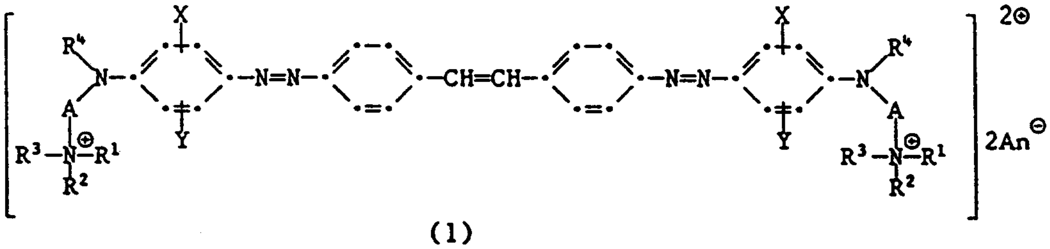

(1)

dans laquelle $R^1$, $R^2$, $R^3$ et $R^4$ représentent indépendamment l'un de l'autre un groupe méthyle, éthyle, n- ou iso-propyle, n-, sec- ou ter-butyle, pentyle ou hexyle ramifié ou linéaire, cyclopentyle ou cyclohexyle, ces résidus pouvant être substitués par des groupes hydroxy, cyano, phényle ou alcoxy, ou dans laquelle $R^1$ et $R^2$ forment avec l'atome d'azote les reliant un résidu pyrrolidine pipéridine morpholine ou pipérazine ou
dans laquelle $R^1$, $R^2$ et $R^3$ forment avec l'atome d'azote les reliant un résidu pyridinium ou un résidu triéthylenediamine monoquaternisé, et
dans laquelle A représente un groupe alkylène comportant entre 2 et 6 atomes de carbone, X et Y représentent indépendamment l'un de l'autre un atome d'hydrogène, d'halogène, un groupe alkyle en $C_1$-$C_4$, éventuellement substitués par des résidus hydroxy, cyano ou alcoxy en $C_1$-$C_4$, et $An^-$ représente un anion.

2. Colorants diazoïques conformes à la revendication 1, dans lesquels $R^1$, $R^2$ et $R^3$ sont indépendamment des groupes alkyle en $C_1$-$C_3$ ou hydroxyéthyle, ou $R^1$, $R^2$ et $R^3$ forment avec l'atome d'azote les reliant un résidu pyridinium.

3. Colorants diazoïques conforme à la revendication 1 ou 2, dans lesquels $R_4$ représente un résidu alkyle en $C_1$-$C_{12}$ non substitué, en particulier un résidu alkyle en $C_1$-$C_4$.

4. Colorants diazoïques conformes à une des revendication 1 à 3, dans lesquels A représente un groupe éthylène éthylidène, propylène, triméthylène, éthylène, 1-méthyl-1,3-triméthylène, pentaméthylène, hexaméthylène ou 2-hydroxy-1,3-triméthylène, de préférence un groupe propylène, triméthylène, 2-hydroxy-1,3-triméthylène ou éthylène.

5. Colorants diazoïques conformes à une des revendications 1 à 4, dans lesquels X représente un atome d'hydrogène ou un groupe méthyle.

6. Colorants diazoïques conformes à une des revendications 1 à 4, dans lesquels Y représente un atome d'hydrogène, un groupe méthyle, un groupe méthoxy ou un atome de chlore.

7. Colorants diazoïques conformes à la revendication 1, dans lesquels
$R^1$, $R^2$ et $R^3$ représente de préférence indépendamment des groupes alkyle en $C_1$-$C_3$ ou hydroxyéthyle ou $R^1$, $R^2$ et $R^3$ forment avec l'atome d'azote les reliant un résidu pyridinium.
$R^4$ représente un résidu alkyle en $C_1$-$C_4$,
A représente un résidu propylène, triméthylène, 2-hydroxy-1,3-triméthylène ou éthylène,
X représente un atome d'hydrogène,
Y un atome d'hydrogène ou de chlore ou un groupe méthyle ou méthoxy et $An^-$ un anion.

8. Procédé pour la préparation des colorants diazoïques de formule (1) conformes à la revendication 1, caractérisé par une double diazotation de 1 mole de 4,4'-diaminostilbène suivie de la réaction avec 2 moles d'un copulant de formule

(2) 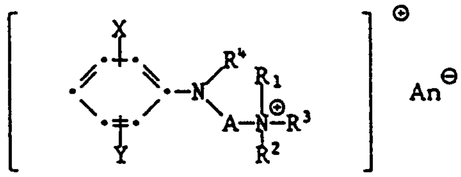

dans laquelle X, Y, A, $R^1$, $R^2$, $R^3$, $R^4$ et $An^-$ ont la signification indiquée dans la revendication 1.

**9.** Utilisation des composés azoïques de formule (1) conformes à la revendication 1, pour la teinture et l'impression de matériaux textiles, de papier, de cuir et pour la préparation d'encres.

**10.** Utilisation des composés azoïques de formule (1) conformes à la revendication 1, pour la teinture et l'impression de matériaux en cellulose naturelle et régénérée, en particulier du coton et de la viscose.

**11.** Utilisation des composés azoïques de formule (1) conformes à la revendication 1, pour la teinture et l'impression de toutes sortes de papier, en particulier pour la teinture et l'impression de papier blanchi, non collé exempt de lignine.

**12.** Utilisation des composés azoïques de formule (1) conformes à la revendication 1, pour la teinture et l'impression de matériaux en polyacrylonitriles.

**13.** Matériaux traités ou teints et imprimés avec les composés azoïques de formule (1).